# FASCICULE DE BREVET EUROPEEN

(11) **EP 4 158 159 B1**
(45) Date de publication et mention de la délivrance du brevet: **12.06.2024**
(21) Numéro de dépôt: 21734389.6
(22) Date de dépôt: 19.05.2021
(51) Int. Cl.: F01D 25/16, F02C 7/32, F02C 7/36

(54) **TURBOMACHINE ÉQUIPÉE DE DEUX MACHINES ÉLECTRIQUES MONTÉES EN SÉRIE AVEC UN RÉDUCTEUR DE VITESSE**
TURBOMASCHINE MIT ZWEI IN REIHE GESCHALTETEN ELEKTRISCHEN MASCHINEN MIT UNTERSETZUNGSGETRIEBE
TURBOMACHINE EQUIPPED WITH TWO ELECTRIC MACHINES MOUNTED IN SERIES WITH A REDUCTION GEAR

(30) Priorité: 27.05.2020 FR 2005588
(43) Date de publication de la demande: 05.04.2023
(73) Titulaire: Safran Transmission Systems, 92700 Colombes (FR)
(72) Inventeur: PELTIER, Jordane Emile André, 77550 MOISSY-CRAMAYEL (FR); MORELLI, Boris Pierre Marcel, 77550 MOISSY-CRAMAYEL (FR); BECK, Guillaume Julien, 77550 MOISSY-CRAMAYEL (FR)
(74) Mandataire: Gevers & Orès
(86) Numéro de dépôt international: PCT/FR2021/050885
(87) Numéro de publication internationale: WO 2021/240094

(56) Documents cités:
- FR-A1- 2 908 461
- FR-A1- 2 946 091
- FR-A1- 2 953 199
- US-A1- 2008 028 763
- US-A1- 2016 130 971

## Description

### Domaine de l'invention

La présente invention est relative au domaine des turbomachines pour aéronefs, et notamment des turbomachines équipées de machine électrique. Elle vise en particulier une machine électrique qui est montée en série avec un réducteur de vitesse.

### Etat de la technique

L'art antérieur comprend les documents FR-A1 -2946091, US-A1-2016/130971 et FR-A1-2908461.

Une turbomachine d'aéronef telle qu'une turbomachine double flux comprend de manière générale une soufflante carénée disposée en entrée de la turbomachine et qui est entraînée en rotation par un arbre basse pression. Un réducteur peut être interposé entre la soufflante et l'arbre basse pression pour que la soufflante tourne à une vitesse inférieure à celle de l'arbre de basse pression. La réduction de la vitesse permet également d'augmenter la taille de la soufflante permettant alors d'atteindre des taux de dilution élevés.

Outre la propulsion de l'aéronef, la turbomachine assure la production de courant électrique à l'aide typiquement d'un alternateur à aimant permanent (généralement appelé PMA signifiant « Permanent Magnet Alternator ») d'un boitier d'accessoires connu sous l'acronyme anglais AGB (pour Accessory Gear Box) pour alimenter différents équipements ou accessoires nécessaires au fonctionnement de la turbomachine ou de l'aéronef comme par exemple l'éclairage de la cabine de l'aéronef, l'opérabilité d'un système de conditionnement et de pressurisation d'air de la cabine de l'aéronef ou encore l'alimentation d'une pompe de lubrification d'organes tournants de la turbomachine.

Il est connu d'équiper le boîtier d'accessoires d'une machine électrique qui est un dispositif électromécanique basé sur l'électromagnétisme permettant la conversion d'énergie électrique par exemple en énergie mécanique (mode générateur) ou de manière réversible, permettant la production de l'électricité à partir d'une énergie mécanique (mode moteur). La machine électrique peut se comporter également en mode générateur comme en mode moteur.

Face au défi environnemental dans le domaine aéronautique et aux besoins de puissances électriques croissants concomitamment avec le nombre d'équipements et de nouvelles fonctions de l'aéronef, il est nécessaire de trouver et de compléter ces sources d'énergie; la question de l'hybridation de la turbomachine se pose donc.

L'agencement de la machine électrique au sein de l'AGB ne permet pas d'apporter un gain significatif de puissance électrique pour l'accroissement de la puissance électrique de l'ensemble des fonctions de l'aéronef et le rendement de la conversion de la puissance mécanique en puissance électrique n'est pas à son maximum. De plus, l'intégration de la machine électrique dans diverses zones de la turbomachine s'avère complexe et est contrainte par l'encombrement, la tenue en température de certains composants de la machine électrique, l'accessibilité, la performance de la turbomachine elle-même, etc.

### Résumé de l'invention

La présente invention a notamment pour objectif de fournir une solution permettant l'intégration d'un ou de plusieurs équipements dans la turbomachine tout en évitant de pénaliser la masse de la turbomachine.

Nous parvenons à cet objectif, conformément à l'invention, grâce une turbomachine < ayant les caractéristiques de la revendication 1, comprenant une soufflante, un arbre moteur destiné à être entraîné en rotation autour d'un axe longitudinal X dans un premier carter, un deuxième carter entourant et coaxial avec le premier carter, et un arbre d'entraînement relié d'une part, à l'arbre moteur et d'autre part, à au moins un premier équipement via un premier dispositif de renvoi d'angle de transmission de puissance, le premier équipement étant une première machine électrique et en ce que la turbomachine comprend un réducteur de vitesse agencé cinématiquement entre le premier équipement et le premier dispositif de renvoi d'angle de transmission mécanique. La turbomachine comprend un deuxième équipement qui est monté en série avec le premier équipement, le deuxième équipement étant agencé en amont du réducteur de vitesse qui est destiné à transmettre la puissance du premier dispositif de renvoi d'angle de transmission de puissance au premier équipement.

Ainsi, cette solution permet d'atteindre l'objectif susmentionné. En particulier, une telle configuration permet d'avoir une capacité de réduction de vitesse beaucoup plus importante. Les deux équipements sont montés en série, à iso vitesse, et la configuration permet d'avoir un couple plus important. Le couple impacte directement le diamètre de l'équipement tel qu'une machine électrique. De plus, agencer les équipements en série dans la turbomachine permet un gain au niveau de l'encombrement axial.

La turbomachine comprend également l'une ou plusieurs des caractéristiques suivantes:
- la turbomachine comprend un troisième carter qui est coaxial et entoure le deuxième carter, le deuxième carter et le troisième carter délimitant au moins en partie une veine d'écoulement d'un flux d'air secondaire généré par la soufflante, et en ce que le premier équipement et le deuxième équipement sont agencés de manière sensiblement affleurante avec une surface radialement externe du deuxième carter.
- les premier et deuxième équipements sont logés dans la veine d'écoulement du flux d'air secondaire.
- le premier dispositif de renvoi d'angle de transmission de puissance est logé dans un boîtier formé d'un seul tenant avec le deuxième carter.
- le premier dispositif de renvoi d'angle de transmission de puissance est logé dans un boîtier formé d'un seul tenant avec le troisième carter.
- le premier dispositif de renvoi d'angle de transmission de puissance est logé dans un boîtier formé d'un seul tenant avec le premier carter.
- le premier dispositif de renvoi d'angle de transmission de puissance comprend un premier arbre de transmission de puissance portant à une extrémité une roue de sortie engrenant avec un pignon d'entrée qui est monté sur une première extrémité d'un arbre d'entraînement, l'arbre d'entraînement étant couplé à l'arbre moteur via un deuxième dispositif de renvoi d'angle de transmission de puissance.
- le réducteur de vitesse comprend un train d'engrenage épicycloïdal ou planétaire.
- l'arbre moteur porte une roue d'entrée coaxiale à l'axe longitudinal X et coopérant avec un pignon de sortie monté à une deuxième extrémité de l'arbre d'entrainement.
- le deuxième équipement comprend une deuxième machine électrique.
- l'arbre d'entraînement s'étend sensiblement radialement entre le premier et le deuxième carter.
- l'arbre d'entraînement est logé dans un bras de carter ou une aube de stator qui s'étend au moins en partie entre le premier et le deuxième carter.
- la soufflante est entraînée par l'arbre moteur par l'intermédiaire d'un réducteur de vitesse.
- les pignons et les roues sont coniques.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux figures suivantes annexées :
[Fig.1] La figure 1 est une vue schématique et en coupe axiale d'une turbomachine double flux selon l'invention ;
[Fig. 2] La figure 2 est une vue schématique de l'agencement d'une machine électrique en série avec un dispositif de renvoi d'angle de transmission de puissance et un réducteur de vitesse selon un exemple n'entrant pas dans le cadre des revendications,
[Fig. 3] La figure 3 est une vue en coupe axiale et partielle d'un exemple de boîtier dans lequel est logé un dispositif de renvoi d'angle de transmission de puissance selon l'invention ; et
[Fig. 4] La figure 4 est une vue schématique de l'agencement de deux machines électriques en série, dans la veine secondaire, avec un réducteur de vitesse agencé cinématiquement entre les deux machines électriques selon l'invention.

### Description détaillée de l'invention

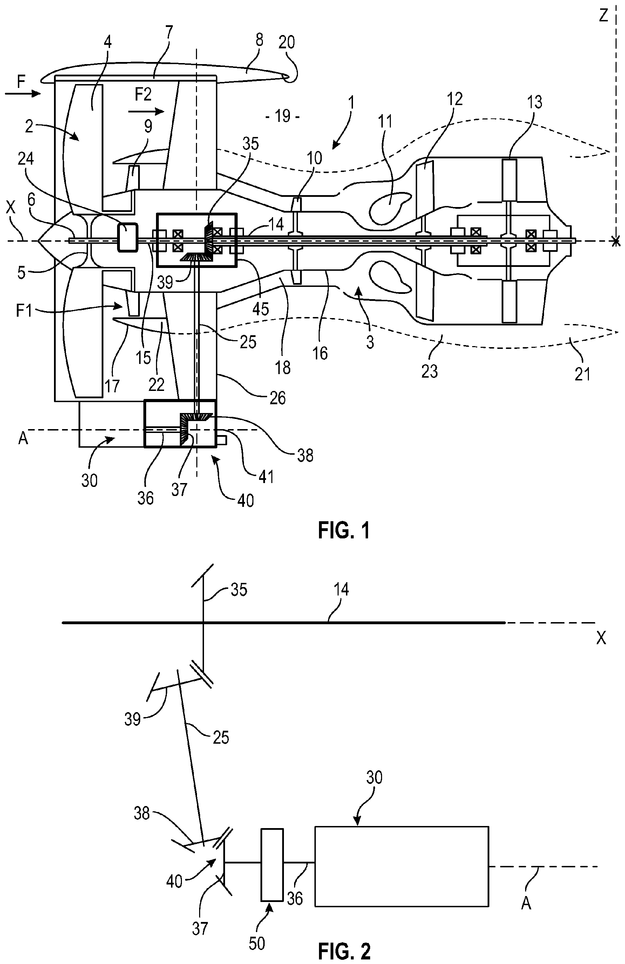

La figure 1 montre une vue en coupe axiale d'une turbomachine 1 d'axe longitudinal X à laquelle s'applique l'invention. La turbomachine représentée est une turbomachine double flux et double corps destinée à être montée sur un aéronef. Bien entendu, l'invention n'est pas limitée à ce type de turbomachine.

Dans la présente demande, les termes « amont », « aval », « axial » et « axialement » sont définis par rapport au sens de circulation des gaz dans la turbomachine et également suivant l'axe longitudinal (et même de gauche à droite sur la figure 1). Les termes « radial », « radialement », « interne » et « externe » sont également définis par rapport à un axe radial Z qui est perpendiculaire à l'axe X de la turbomachine.

Cette turbomachine 1 à double flux et double corps comprend une soufflante 2 qui est montée en amont d'un générateur de gaz ou moteur de turbine à gaz 3. La soufflante 2 comprend une pluralité d'aubes de soufflante 4 qui s'étendent radialement depuis la périphérie d'un disque 5 traversé par un arbre de soufflante 6.

La turbomachine comprend un arbre moteur qui s'étend suivant l'axe longitudinal X dans un premier carter. Un deuxième carter est monté autour et coaxial avec le premier carter. Un troisième carter est monté autour et coaxial avec le deuxième carter. Le troisième carter est également coaxial avec le premier carter.

Le générateur de gaz 3 comprend d'amont en aval et suivant une représentation schématique, un compresseur basse pression (BP) 9, un compresseur haute pression (HP) 10, une chambre de combustion 11, une turbine haute pression 12 et une turbine basse pression 13. Le compresseur HP 10 est relié à la turbine HP via un arbre HP 14 centré sur l'axe longitudinal pour former un premier corps dit haute pression. Le compresseur BP est relié à la turbine BP via un arbre BP 15 centré sur l'axe longitudinal pour former un deuxième corps dit basse pression. L'arbre BP 15 s'étend à l'intérieur de l'arbre HP 14.

L'arbre HP 14, qui est un premier arbre moteur, est entraîné en rotation suivant l'axe longitudinal dans un premier carter (dénommé carter interne 16).

La soufflante 2 est entourée du troisième carter (dénommé carter de soufflante 7) qui est coaxial avec le carter interne 16. Le carter de soufflante 7 est porté par une nacelle 8 qui s'étend autour du générateur de gaz 3 et suivant l'axe longitudinal X. L'arbre de soufflante 6 est relié à un deuxième arbre moteur qui l'entraîne en rotation autour de l'axe longitudinal X.

Un flux d'air F qui entre dans la turbomachine via la soufflante 2 est divisé par un bec de séparation 17 de la turbomachine en un flux d'air primaire F1 qui traverse le générateur de gaz 3 et en particulier dans une veine primaire 18, et en un flux d'air secondaire F2 qui circule autour du générateur de gaz 3 dans une veine secondaire 19. La veine primaire 18 et la veine secondaire 19 sont coaxiales. Le flux d'air secondaire F2 est éjecté par une tuyère secondaire 20 terminant la nacelle 8 alors que le flux d'air primaire F1 est éjecté à l'extérieur de la turbomachine via une tuyère d'éjection 21 située en aval du générateur de gaz. Les flux d'air primaire et secondaire se rejoignent en sortie de leurs tuyères respectives.

La veine primaire 18 est délimitée au moins en partie, radialement, par le premier carter (carter interne 16) et le deuxième carter. La veine secondaire 19 est quant à elle délimitée au moins en partie, radialement, par le deuxième carter et le troisième carter (carter de soufflante 7 avec la nacelle 8). Un carter d'entrée 22 porte le bec de séparation 15 en amont et est prolongé en aval par un carter inter-veine 23 qui porte la tuyère d'éjection 21. Le carter inter-veine 23 est ici le deuxième carter.

Des aubes de stator, directrices de sortie, (connues sous l'acronyme OGV) (non représentées) qui relient structurellement le carter d'entrée 22 au carter de soufflante 7, s'entendent sensiblement radialement dans le flux d'air secondaire et autour de l'axe longitudinal X.

Dans le présent exemple, le deuxième arbre moteur est l'arbre BP 15. Un mécanisme de transmission de puissance peut être intercalé entre l'arbre de soufflante 6 et l'arbre BP 15. Le mécanisme de transmission de puissance permet de réduire la vitesse de la soufflante 2 à une vitesse inférieure à celle de l'arbre BP 15. D'autre part, le mécanisme de transmission de puissance permet l'agencement d'une soufflante avec un diamètre important de manière à augmenter le taux de dilution. Le taux de dilution de la soufflante est avantageusement supérieur à 10. Préférentiellement, le taux de dilution est compris entre 15 et 20.

En référence à la figure 1, le mécanisme de transmission de puissance comprend un réducteur 24 qui est ici un réducteur de vitesse à train planétaire. Bien entendu un réducteur de vitesse à train épicycloïdal est envisageable. Le réducteur est logé dans une enceinte de lubrification agencée en amont du générateur de gaz 3 et le carter interne 16 annulaire. Le train d'engrenage du réducteur de vitesse 24 comprend typiquement un solaire (ou planétaire interne) (non représenté), une pluralité de satellites (non représentés), un porte-satellites (non représenté), et une couronne (planétaire externe) (non représentée). Le solaire est centré sur l'axe longitudinal X et est couplé en rotation avec l'arbre BP suivant l'axe longitudinal X. Les satellites sont portés par le porte-satellites et sont chacun guidés en rotation autour d'un axe de satellite, ici, parallèle à l'axe longitudinal X. Chaque satellite engrène avec des dentures externes du solaire et des dentures internes de la couronne. Dans le cas d'un train planétaire, le porte-satellites est bloqué en rotation et est solidaire d'un carter de stator de la turbomachine, et la couronne, centrée sur l'axe longitudinal X, entoure le solaire et est couplée en rotation avec l'arbre de soufflante. A l'inverse, dans le cas du train épicycloïdal, le porte-satellites est couplé en rotation avec l'arbre de soufflante et la couronne qui est fixe en rotation, est solidaire d'un carter de stator de la turbomachine.

La turbomachine comprend un arbre d'entrainement 25 qui est relié d'une part, à l'arbre haute pression 14 et d'autre part, à au moins un équipement ou un accessoire de la turbomachine. L'équipement est destiné à prélever ou injecter une puissance (mécanique ou électrique) sur l'arbre moteur (l'arbre haute pression 14). L'équipement comprend au moins un organe qui est entraîné en rotation par l'arbre haute pression 14 via l'arbre d'entrainement 25. L'arbre d'entraînement 25 s'étend sensiblement radialement (avec un angle incliné entre 5° et 25° par rapport à l'axe radial par exemple) ou radialement. Celui-ci traverse également un élément structural qui s'étend sensiblement radialement au moins en partie entre le carter interne 16 et le carter de soufflante 7 et/ou la nacelle 8.

Dans le présent exemple, l'élément structural est un bras de carter 26 qui relie structurellement le carter interne 16 au carter de soufflante 7. De manière alternative, l'élément structural est une aube de stator (OGV). Dans cette éventualité, l'aube de stator serait montée à la place du bras 26 ou à proximité axialement de celui-ci.

En référence à la figure 2, l'équipement est une machine électrique 30 qui coopère avec un organe de transmission de puissance intermédiaire.

En particulier, la machine électrique 30 comprend un rotor et un stator de manière à bénéficier d'une puissance électrique supplémentaire dans la turbomachine, pour alimenter divers organes de la turbomachine et/ou l'aéronef. La machine électrique 30 fonctionne avantageusement, mais non limitativement, en tant que générateur, c'est-à-dire que celle-ci permet la conversion d'énergie mécanique en énergie électrique. En particulier, celle-ci prélève de la puissance mécanique pour la transformer en énergie électrique. La machine électrique 30 peut bien entendu fonctionner en mode moteur de manière à convertir de l'énergie électrique en énergie mécanique. L'énergie mécanique générée est injectée dans la turbomachine. Dans le présent exemple, la machine électrique est réversible, c'est-à-dire que celle-ci fonctionne en mode générateur et moteur.

Comme nous pouvons le voir précisément sur les figures 1 et 2, une roue d'entrée 35 est portée par l'arbre haute pression 14. Cette roue d'entrée 35 est centrée sur l'axe longitudinal X et porte sur sa surface radialement externe une série de dents. La roue d'entrée 35 est avantageusement conique. Le réducteur de vitesse 24 est agencé en amont de cette roue d'entrée 35.

La machine électrique 30 est couplée à un premier arbre de transmission de puissance 36 qui présente un axe de rotation A. Le premier arbre de transmission de puissance 36 comprend à une extrémité une roue de sortie 37. La roue de sortie 37 est centrée sur l'axe de rotation A et est dentée. La roue de sortie 37 est également conique.

L'arbre d'entrainement 25 sensiblement radial comprend une première extrémité qui porte un pignon d'entrée 38 et une deuxième extrémité qui porte un pignon de sortie 39. Ces pignons 38, 39 sont pourvus de dents et sont coniques.

La roue de sortie 37 du premier arbre de transmission de puissance 36 engrène avec le pignon de sortie 38 de l'arbre d'entraînement 25 en formant un renvoi d'angle. Le renvoi d'angle permet de transmettre un mouvement de rotation entre deux arbres qui ne sont pas parallèles.

La roue de sortie 37 du premier arbre de transmission de puissance 36 et le pignon d'entrée 38 de l'arbre d'entrainement 25 forment un premier dispositif de renvoi d'angle de transmission de puissance 40. Ce dernier est disposé cinématiquement entre l'arbre d'entraînement 25 et la machine électrique 30.

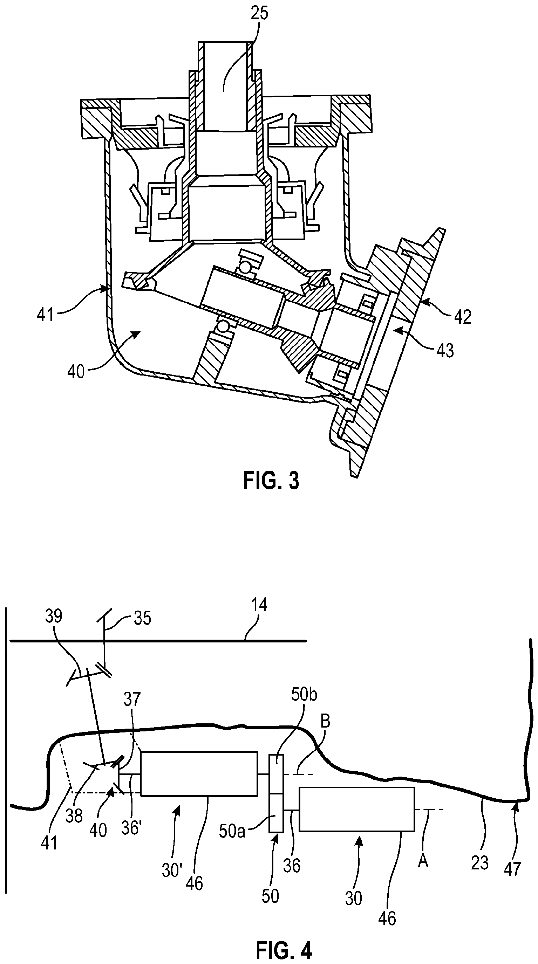

Le premier dispositif de renvoi d'angle de transmission de puissance 40 est logé dans un boîtier ou carter de transmission 41 (cf. figure 3) qui enveloppe et supporte les engrenages (formés des pignons et roues). En d'autres termes, le boîtier 41 est creux.

Suivant l'exemple de la figure 1, le boîtier 41 est monobloc avec le carter de soufflante 7 (troisième carter). De manière avantageuse, le boîtier 41 est formé d'un seul tenant (soit venu de matière) avec le carter de soufflante 7. De manière alternative, le boîtier 41 est fixé sur le carter de soufflante au moyen d'une soudure, d'éléments filetés (brides vissées, etc.), de bielles ou tout autre moyen de fixation. Suivant une autre alternative, le boîtier 41 est monobloc avec la nacelle 8.

Dans l'exemple de réalisation de la figure 4, le boîtier 41 qui enveloppe et supporte les engrenages (formés des pignons et roues) est monobloc avec le carter inter veine 23. De manière avantageuse, le boîtier 41 est formé d'un seul tenant (soit venu de matière) avec le carter inter-veine 23 (deuxième carter). Le boîtier peut être en saillie radialement vers l'extérieur depuis une surface radialement externe 47 du carter inter-veine 23. De manière alternative, le boîtier 41 est fixé sur le carter inter-veine 23 au moyen d'une soudure, d'éléments filetés (brides vissées, etc.), de bielles ou tout autre moyen de fixation.

Suivant encore un autre mode de réalisation (non représenté), le boîtier 41 est monobloc avec le carter interne 16. Le boîtier 41 est en particulier venu de matière avec une paroi du carter interne. Le boîtier peut s'étendre en saillie depuis une surface radialement externe ou interne de la paroi du carter interne 16. De manière alternative, le boîtier 41 est fixé sur le carter interne au moyen d'une soudure, d'éléments filetés (brides vissées, etc.), de bielles ou tout autre moyen de fixation. Dans ce cas de figure, l'arbre d'entraînement s'étend sensiblement radialement à l'intérieur du carter interne 16.

Ces configurations (boîtier monobloc avec le carter interne ou avec le carter inter-veine) permet que la machine électrique soit placée au plus de la « zone core » de la turbomachine et en étant sensiblement parallèle à l'axe de la turbomachine. La « zone core » est située dans le carter interne 16 ou dans le carter inter-veine 23 (soit entre la veine primaire 18 et la veine secondaire 19). De plus, la zone core est une zone feu (autour de la chambre de combustion).

Le boîtier est réalisé dans un matériau métallique ou un alliage métallique. De manière avantageuse, mais non limitativement, le matériau ou l'alliage métallique comprend de l'acier, de l'aluminium, du magnésium, du titane ou encore un alliage métallique.

Le boîtier peut être réalisé par un procédé de fabrication additive, par fonderie ou encore par usinage.

Sur la figure 3, le boîtier 41 comprend une surface d'accouplement 42 qui est définie dans un plan qui est sensiblement perpendiculaire à l'axe de rotation du premier arbre de transmission de puissance 36. Le plan est sensiblement radial. La surface d'accouplement 42 est pourvue d'un orifice traversant 43. L'arbre de transmission de puissance 36, couplé à une machine électrique 30, s'étend depuis la surface d'accouplement 42, en traversant l'orifice traversant. Au moins une partie de l'arbre de transmission de puissance 36 s'étend dans le boîtier 41.

L'axe de rotation A du premier arbre de transmission de puissance 36 est sensiblement parallèle à l'axe longitudinal X.

L'organe de transmission de puissance est ici un réducteur de vitesse (ici deuxième réducteur de vitesse) 50. Le réducteur de vitesse 50 est agencé cinématiquement entre le premier dispositif de renvoi d'angle de transmission de puissance et la machine électrique 30. De manière avantageuse, le réducteur de vitesse 50 est un train d'engrenage de type épicycloïdal ou planétaire. Ces trains ont une capacité de réduction plus importante qu'un train classique.

Selon l'invention et comme illustré sur la figure 4, il y a deux machines électriques 30, 30'. Avantageusement, les deux machines 30, 30' sont montées en série. La deuxième machine électrique 30' est couplée à un deuxième arbre de transmission de puissance 36' d'axe de rotation B. Cet axe de rotation B est parallèle à l'axe de rotation A du premier arbre de transmission de puissance 36. Les axes A et B sont décalés radialement. La deuxième machine électrique 30' est couplée à la première machine électrique 30 au moyen du réducteur de vitesse 50 qui est avantageusement placé entre les deux.

Avantageusement, le stator de la machine électrique est fixé sur un élément fixe et le rotor est lié à la chaîne cinématique. En particulier, le stator d'au moins une machine électrique 30, 30' est fixé au boîtier 41. Celui-ci est par exemple monté sur la paroi interne du boîtier. De manière alternative chaque stator est monté sur la paroi interne d'une enveloppe 46 de la machine électrique 30, laquelle enveloppe est fixe et aussi fixée au boîtier 41. L'enveloppe 46 de la machine électrique 30 peut être, selon les modes de réalisation décrits ci-dessus, fixée sur le carter interne 16, le carter interne-veine 23 ou le carter de soufflante 7. Quant à chaque rotor de la machine électrique 30, 30' celui-ci est couplé en rotation avec un arbre de transmission de puissance 36.

Avantageusement, le réducteur de vitesse 50 comprend au moins une première roue dentée 50a et une deuxième roue dentée 50b. La première roue dentée 50a est couplée au premier arbre de transmission de puissance 36 tandis que la deuxième roue dentée 50b est couplée au deuxième arbre de transmission de puissance 36'. La première roue dentée 50a engrène avec la deuxième roue dentée 50b.

De manière avantageuse, la ou les machines électriques 30, 30' sont agencées radialement à l'extérieur du carter inter-veine 23 comme cela est représenté sur la figure 4. Celles-ci sont logées dans la veine d'écoulement 19 du flux d'air secondaire. Préférentiellement, les machines électriques 30, 30' s'étendent axialement le long du deuxième carter 23 et de manière sensiblement affleurante à la surface radialement externe 47 de celui-ci, ce qui permet de réduire l'encombrement radial. Le flux secondaire de la veine secondaire, dans laquelle s'étendent les machines électriques, permet de les refroidir.

Par le sensiblement affleurant, nous entendons que les enveloppes de machines électriques peuvent être montées directement sur la surface des carters ou être à distance de celle-ci de sorte à permettre une circulation d'air.

Par ailleurs, en référence aux figures 1 à 3, la roue d'entrée 35 engrène avec le premier pignon de sortie 39 de l'arbre d'entraînement 25 en formant un renvoi d'angle. En particulier, la roue d'entrée 35 et le premier pignon de sortie 39 forment un deuxième dispositif de renvoi d'angle de transmission de puissance 45 qui est disposé entre l'arbre haute pression 14 et l'arbre d'entrainement 25. La coopération entre la roue d'entrée 35 et le premier pignon de sortie 39 assure, lors d'une rotation de l'arbre haute pression 14 suivant l'axe longitudinal, la rotation également de l'arbre d'entraînement 25 suivant son axe sensiblement radial. De la sorte, la rotation de l'arbre d'entraînement engendre la rotation des arbres de transmission de puissance suivant leurs axes de rotation A. Le réducteur de vitesse 50 assure la réduction de vitesse.

Ainsi, dans le cas d'un fonctionnement moteur des machines électriques, les arbres de transmission de puissance 36 leur fournissent la puissance mécanique lors de leurs rotations et qui sera convertie en puissance électrique. Cette puissance électrique supplémentaire sera disponible une fois que la turbomachine a démarré, et en particulier, pendant le vol et en phase d'atterrissage. L'énergie électrique peut être stockée avantageusement dans un élément de stockage d'énergie embarquée dans l'avion, tel qu'une batterie ou au moins une pile à combustible. Les machines électriques et élément de stockage sont reliés électriquement.

La turbomachine est également équipée d'un moteur électrique qui est destiné à être alimenté en courant électrique par chaque machine électrique (en mode moteur). A cet effet, le moteur électrique et chaque machine électrique 30, 30' sont reliés électriquement par un câblage électrique. Ce moteur électrique est agencé au niveau du carter de soufflante et en aval des machines électriques. Dans le cas d'injection de puissance sur un des arbres moteurs, la puissance électrique produite par les machines électriques est envoyée à l'arbre moteur par l'intermédiaire du moteur électrique ou alternativement par la batterie. La puissance électrique entraîne en rotation l'arbre d'entraînement qui entraîne à son tour l'arbre moteur, ici l'arbre haute pression 14. Cela permet d'améliorer les performances du moteur par exemple et de réduire la consommation de carburant pour alimenter la chambre de combustion.

La chaine cinématique intermédiaire créée par le réducteur de vitesse 50 permet de faire tourner les machines électriques avantageusement à deux vitesses différentes.

Les deux machines électriques fonctionnent simultanément et créent une redondance de sorte à avoir plus de puissance mécanique ou électrique. Cela permet en particulier d'avoir un minimum de puissance disponible si une des machines électriques est défaillante. Suivant un exemple de réalisation, les machines électriques 30, 30' peuvent fonctionner indépendamment l'une de l'autre.

La ou les machines 30, 30' est/sont configurée(s) pour injecter de la puissance mécanique à l'arbre haute pression par le moteur électrique qui l'entraîne en rotation.

## Revendications

1. Turbomachine (1) comprenant une soufflante (2), un arbre moteur (14, 15) destiné à être entraîné en rotation autour d'un axe longitudinal X dans un premier carter (16), un deuxième carter (23) entourant et coaxial avec le premier carter (16), et un arbre d'entraînement (25) relié d'une part, à l'arbre moteur (14, 15) et d'autre part, à au moins un premier équipement via un premier dispositif de renvoi d'angle de transmission de puissance (40), le premier équipement (30) étant une première machine électrique , la turbomachine (1) comprenant un réducteur de vitesse (50) agencé cinématiquement entre le premier équipement (30) et le premier dispositif de renvoi d'angle de transmission mécanique (40), **caractérisée en ce qu'**elle comprend un deuxième équipement (30') qui est monté en série avec le premier équipement (30), le deuxième équipement (30') étant agencé en amont du réducteur de vitesse (50) qui est destiné à transmettre la puissance du premier dispositif de renvoi d'angle de transmission de puissance (40) au premier équipement (30).

2. Turbomachine (1) selon la revendication 1, **caractérisée en ce qu'**elle comprend un troisième carter (7, 8) qui est coaxial et entoure le deuxième carter (23), le deuxième carter (23) et le troisième carter (7, 8) délimitant au moins en partie une veine d'écoulement (19) d'un flux secondaire généré par la soufflante, et **en ce que** le premier équipement (30) et le deuxième équipement (30') sont agencés de manière sensiblement affleurante avec une surface radialement externe (47) du deuxième carter (23)

3. Turbomachine (1) selon l'une quelconque des revendications précédentes, **caractérisée en ce que** le premier dispositif de renvoi d'angle de transmission de puissance (40) est logé dans un boîtier (41) formé d'un seul tenant avec le deuxième carter (23)

4. Turbomachine (1) selon l'une des revendications précédentes, **caractérisée en ce que** le premier dispositif de renvoi d'angle de transmission de puissance (40) comprend un premier arbre de transmission de puissance (36) portant à une extrémité une roue de sortie (37) engrenant avec un pignon d'entrée (38) qui est monté sur une première extrémité d'un arbre d'entraînement (25), l'arbre d'entraînement (25) étant couplé à l'arbre moteur (14, 15) via un deuxième dispositif de renvoi d'angle de transmission de puissance (45).

5. Turbomachine (1) selon l'une des revendications précédentes, **caractérisée en ce que** le réducteur de vitesse (50) comprend un train d'engrenage épicycloïdal ou planétaire.

6. Turbomachine (1) selon l'une quelconque des revendications précédentes, **caractérisée en ce que** l'arbre moteur (14, 15) porte une roue d'entrée (35) coaxiale à l'axe longitudinal X et coopérant avec un pignon de sortie (39) monté à une deuxième extrémité de l'arbre d'entrainement (25).

7. Turbomachine (1) selon l'une des revendications 2 à 6, **caractérisée en ce que** le deuxième équipement (30') comprend une deuxième machine électrique.

8. Turbomachine (1) selon l'une des revendications précédentes, **caractérisée en ce que** l'arbre d'entraînement (25) s'étend sensiblement radialement entre le premier carter (16) et le deuxième carter (23).

9. Turbomachine (1) selon l'une quelconque des revendications précédentes, **caractérisée en ce que** l'arbre d'entraînement (25) est logé dans un bras de carter ou une aube de stator qui s'étend au moins en partie entre le premier carter (16) et le deuxième carter (23).

## Patentansprüche

1. Turbotriebwerk (1), umfassend ein Gebläse (2), eine Motorwelle (14, 15), die dazu vorgesehen ist, um eine Längsachse X in einem ersten Gehäuse (16) in Drehung versetzt zu werden, ein zweites Gehäuse (23), das das erste Gehäuse (16) umgibt und koaxial zu diesem ist, und eine Antriebswelle (25), die einerseits mit der Motorwelle (14, 15) und andererseits über eine erste Winkelgetriebevorrichtung zur Leistungsübertragung (40) mit mindestens einer ersten Ausrüstung verbunden ist, wobei die erste Ausrüstung (30) eine erste elektrische Maschine ist, wobei das Turbotriebwerk (1) ein Untersetzungsgetriebe (50) umfasst, das kinematisch zwischen der ersten Ausrüstung (30) und der ersten mechanischen Winkelgetriebevorrichtung zur Leistungsübertragung (40) eingerichtet ist, **dadurch gekennzeichnet, dass** es eine zweite Ausrüstung (30') umfasst, die in Reihe mit der ersten Ausrüstung (30) angebracht ist, wobei die zweite Ausrüstung (30') stromaufwärts des Untersetzungsgetriebes (50) eingerichtet ist, das dazu vorgesehen ist, die Leistung der ersten Winkelgetriebevorrichtung zur Leistungsübertragung (40) an die erste Ausrüstung (30) zu übertragen.

2. Turbotriebwerk (1) nach Anspruch 1, **dadurch gekennzeichnet, dass** es ein drittes Gehäuse (7, 8) umfasst, das koaxial zum zweiten Gehäuse (23) ist und dieses umgibt, wobei das zweite Gehäuse (23) und das dritte Gehäuse (7, 8) mindestens teilweise einer Abflussader (19) eines sekundären Stroms begrenzen, der von dem Gebläse erzeugt wird, und dadurch, dass die erste Ausrüstung (30) und die zweite Ausrüstung (30') im Wesentlichen bündig mit einer radial äußeren Oberfläche (47) des zweiten Gehäuses (23) eingerichtet sind.

3. Turbotriebwerk (1) nach einem der vorstehenden Ansprüche, **dadurch gekennzeichnet, dass** die erste Winkelgetriebevorrichtung zur Leistungsübertragung (40) in einem Kasten (41) aufgenommen ist, der einstückig mit dem zweiten Gehäuse (23) gebildet ist.

4. Turbotriebwerk (1) nach einem der vorstehenden Ansprüche, **dadurch gekennzeichnet, dass** die erste Winkelgetriebevorrichtung zur Leistungsübertragung (40) eine erste Leistungsübertragungswelle (36) umfasst, die an einem Ende ein Abtriebsrad (37) trägt, das mit einem Eingangsgetriebe (38) in Eingriff steht, das an einem ersten Ende einer Antriebswelle (25) angebracht ist, wobei die Antriebswelle (25) über eine zweite Winkelgetriebevorrichtung zur Leistungsübertragung (45) mit der Motorwelle (14, 15) gekoppelt ist.

5. Turbotriebwerk (1) nach einem der vorstehenden Ansprüche, **dadurch gekennzeichnet, dass** das Untersetzungsgetriebe (50) ein Epizykloid- oder Planetenräderwerk umfasst.

6. Turbotriebwerk (1) nach einem der vorstehenden Ansprüche, **dadurch gekennzeichnet, dass** die Motorwelle (14, 15) ein Eingangsrad (35) trägt, das koaxial zur Längsachse X ist und mit einem Abtriebszahnrad (39) zusammenwirkt, das an einem zweiten Ende der Antriebswelle (25) angebracht ist.

7. Turbotriebwerk (1) nach einem der Ansprüche 2 bis 6, **dadurch gekennzeichnet, dass** die zweite Ausrüstung (30') eine zweite elektrische Maschine umfasst.

8. Turbotriebwerk (1) nach einem der vorstehenden Ansprüche, **dadurch gekennzeichnet, dass** sich die Antriebswelle (25) im Wesentlichen radial zwischen dem ersten Gehäuse (16) und dem zweiten Gehäuse (23) erstreckt.

9. Turbotriebwerk (1) nach einem der vorstehenden Ansprüche, **dadurch gekennzeichnet, dass** die Antriebswelle (25) in einem Gehäusearm oder einer Statorschaufel aufgenommen ist, die sich mindestens teilweise zwischen dem ersten Gehäuse (16) und dem zweiten Gehäuse (23) erstreckt.

## Claims

1. Turbomachine (1) comprising a fan (2), a motor shaft (14, 15) intended to be driven in rotation around a longitudinal axis X in a first casing (16), a second casing (23) surrounding and coaxial with the first casing (16), and a drive shaft (25) connected on the one hand to the motor shaft (14, 15) and on the other hand to at least one first equipment via a first angle gearbox device of power transmission (40), the first equipment (30) being a first electric machine, the turbomachine (1) comprising a speed reducer (50) arranged kinematically between the first equipment (30) and the first angle gearbox device of power transmission (40), **characterized in that** it comprises a second equipment (30') which is mounted in series with the first equipment (30), the second equipment (30') being arranged upstream of the speed reducer (50) which is intended to transmit the power from the first angle gearbox device of power transmission (40) to the first equipment (30).

2. Turbomachine (1) according to claim 1, **characterized in that** it comprises a third casing (7, 8) which is coaxial and surrounds the second casing (23), the second casing (23) and the third casing (7 , 8) delimiting at least partly a flow path (19) of a secondary flow generated by the fan, and **in that** the first equipment (30) and the second equipment (30') are arranged in a substantially flush manner with a radially outer surface (47) of the second casing (23).

3. Turbomachine (1) according to any one of the preceding claims, **characterized in that** the first angle gearbox device of power transmission (40) is housed in a housing (41) formed in one piece with the second casing (23).

4. Turbomachine (1) according to one of the preceding claims, **characterized in that** the first angle gearbox device of power transmission (40) comprises a first power transmission shaft (36) carrying at one end an output gear (37) meshing with an input gear (38) which is mounted on a first end of a drive shaft (25), the drive shaft (25) being coupled to the motor shaft (14, 15) via a second angle gearbox device of power transmission (45).

5. Turbomachine (1) according to one of the preceding claims, **characterized in that** the speed reducer (50) comprises an epicyclic or planetary gear train.

6. Turbomachine (1) according to any one of the preceding claims, **characterized in that** the motor shaft (14, 15) carries an input gear (35) coaxial with the longitudinal axis and cooperating with an output gear (39) mounted at a second end of the drive shaft (25).

7. Turbomachine (1) according to one of claims 2 to 6, **characterized in that** the second equipment (30') comprises a second electric machine.

8. Turbomachine (1) according to one of the preceding claims, **characterized in that** the drive shaft (25) extends substantially radially between the first casing (16) and the second casing (23).

9. Turbomachine (1) according to any one of the preceding claims, **characterized in that** the drive shaft (25) is housed in a casing arm or a stator vane which extends at least partly between the first casing (16) and the second casing (23).
